# DEMANDE DE BREVET EUROPEEN

(11) **EP 1 533 600 A1**
(43) Date de publication de la demande: **25.05.2005**
(21) Numéro de dépôt: 04292639.4
(22) Date de dépôt: 08.11.2004
(51) Int. Cl.: G01L 3/10, G01D 5/245, G01D 5/14, G01D 5/16

(54) **Système capteur de couple absolu de torsion et module le comprenant**

(30) Priorité: 18.11.2003 FR 0350855
(71) Demandeur: S.N.R. ROULEMENTS, 74010 Annecy Cédex (FR)
(72) Inventeur: Desbiolles, Pascal, 74570 Thorens-Glieres (FR)
(74) Mandataire: Geismar, Thierry

(57) **Abrégé**

Système de détermination (1) du couple absolu de torsion appliqué à un arbre tournant, ledit système (1) comprenant un corps d'épreuve (2) déformable en torsion et un dispositif de mesure comprenant :
- un premier (5) et un deuxième (6) codeur destinés à être solidarisés en rotation respectivement au voisinage de chacune des extrémités (3, 4) du corps d'épreuve (2), lesdits codeurs (5, 6) présentant une singularité ou plusieurs singularités équiréparties ;
- un premier (10) et un deuxième (11) capteur fixes disposés en regard et à distance d'entrefer respectivement du premier (5) et du deuxième (6) codeur, chacun desdits capteurs (10, 11) étant apte à délivrer un signal présentant une impulsion (I1, I2) correspondant à la détection d'une singularité (8a, 8b) du codeur (5, 6) ;
ledit système comprenant en outre un dispositif de traitement (12) des signaux issus des capteurs (10, 11) apte à calculer l'écart angulaire entre lesdites singularités (8a, 8b) de sorte à déterminer, par comparaison avec un écart de calibration, le couple absolu de torsion appliqué.

L'invention concerne également un module comprenant un tel système.

## Description

L'invention concerne un système de détermination du couple absolu de torsion appliqué à un arbre tournant, notamment l'arbre d'une colonne de direction d'un véhicule. L'invention concerne également un module de mesure du couple de torsion appliqué à l'arbre tournant comprenant un tel système.

Une colonne de direction conventionnelle est composée d'une gaine tubulaire, fixée à la carrosserie du véhicule, guidant et supportant un arbre de direction. L'arbre de direction relie le volant de direction aux roues directrices du véhicule.

En variante, l'invention s'applique également aux systèmes de direction découplés dans lesquels la colonne de direction n'assure pas une liaison mécanique directe entre le volant et les roues. En effet, contrairement aux colonnes de direction conventionnelles, les colonnes de direction découplées ne sont pas associées à un boîtier de direction transformant le mouvement circulaire du volant de direction en déplacement angulaire de la bielle pendante qui provoque le braquage de roues.

La mesure de couple sur l'arbre de direction est nécessaire notamment dans les directions assistées électriques puisque le déclenchement de l'assistance dépend notamment du couple appliqué par le conducteur sur le volant.

Le dispositif de mesure de couple de torsion utilisé dans les directions assistées électriques émet un signal indicatif du couple de braquage exercé par le conducteur sur le volant et donc sur l'arbre de direction du véhicule.

Ce signal est conventionnellement adressé à un calculateur d'assistance de direction qui déclenche l'assistance, en commandant par exemple un moteur électrique, dans le cas d'une direction assistée électrique.

La mesure du couple appliqué au volant peut également être utilisée, par exemple, dans des simulateurs pour assurer, en temps réel, une bonne simulation de conduite.

En effet, la restitution d'efforts au niveau du volant grâce à un mécanisme générant un couple résistant sur le volant en fonction du type de véhicule à simuler, équipé ou non d'une direction assistée, doit tenir compte des conditions de roulage à recréer.

L'invention peut également s'appliquer à d'autres domaines comme celui de la transmission d'efforts, par exemple aux roues d'un véhicule, ou au contrôle du freinage dudit véhicule au moyen de la mesure du couple appliqué.

On connaît, notamment du document FR-2 816 051 issu de la demanderesse, un dispositif de détermination du couple de torsion appliqué à un arbre tournant. Un tel dispositif présente de nombreux avantages et permet notamment la simplification du montage. En effet, l'utilisation de capteurs numériques permet de s'affranchir des variations d'entrefer et des dérives d'amplitudes en température.

Ce type de dispositif permet de déterminer le couple relatif ou absolu de torsion appliqué à un arbre tournant.

Par couple relatif, on entend la valeur du couple à un instant donné par rapport à une valeur arbitraire de couple prise comme référence. Cette valeur de référence du couple peut alors varier d'une mesure à une autre.

Par couple absolu, on entend la valeur du couple à un instant donné par rapport à une valeur de référence délivrée par le dispositif sous couple nul.

Dans le cadre des directions assistées électriques, par exemple, il peut être important de connaître le couple absolu de torsion appliqué à l'arbre de direction.

Le dispositif du document FR-2 816 051 permet de déterminer le couple absolu de torsion appliqué à un arbre tournant en comparant les positions angulaires absolues des bagues tournantes de deux roulements associés chacun à une extrémité d'un corps d'épreuve.

Une telle détermination nécessite donc de mesurer dans un premier temps les positions angulaires absolues des extrémités du corps d'épreuve pour en déduire le couple absolu de torsion appliqué à l'arbre.

Or, dans certains cas de roulage, notamment lors de la mise en service du dispositif, cette stratégie de détermination peut requérir un déplacement angulaire important de l'arbre tournant avant de connaître la position angulaire absolue et donc un temps relativement important avant de pouvoir déterminer le couple absolu de torsion.

L'invention vise à augmenter la rapidité de détermination du couple absolu de torsion appliqué à un arbre tournant. Pour ce faire, l'écart angulaire entre deux singularités placées chacune sur une extrémité d'un corps d'épreuve se déformant sous l'action d'un couple de torsion est comparé à un écart angulaire de référence.

De ce fait, l'écart angulaire maximum étant déterminé par construction, le couple absolu de torsion est obtenu après un déplacement angulaire limité des extrémités du corps d'épreuve. De plus, le nombre d'opérations de traitement nécessaires à la détermination du couple de torsion est réduit.

En outre, en choisissant un écart angulaire maximum approprié, le système selon l'invention permet une meilleure adaptation à son utilisation.

A cet effet, selon un premier aspect, l'invention propose un système de détermination du couple absolu de torsion appliqué à un arbre tournant, notamment l'arbre d'une colonne de direction d'un véhicule, ledit système comprenant un corps d'épreuve déformable en torsion sous l'action du couple appliqué sur ledit arbre et un dispositif de mesure comprenant :
- un premier et un deuxième codeur destinés à être solidarisés en rotation respectivement au voisinage de chacune des extrémités du corps d'épreuve, lesdits codeurs présentant une singularité ou plusieurs singularités équiréparties avec un écart angulaire supérieur à la valeur maximale de déformation en utilisation du corps d'épreuve, la répartition angulaire des singularités étant identique sur les deux codeurs ;
- un premier et un deuxième capteur fixes disposés en regard et à distance d'entrefer respectivement du premier et du deuxième codeur, chacun desdits capteurs étant apte à délivrer un signal présentant une impulsion correspondant à la détection d'une singularité du codeur ;
ledit système comprenant en outre un dispositif de traitement des signaux issus des capteurs qui, après mesure d'une singularité sur chaque codeur, est apte à calculer l'écart angulaire entre lesdites singularités de sorte à déterminer, par comparaison avec un écart de calibration, le couple absolu de torsion appliqué.

Selon un deuxième aspect, l'invention propose un module de mesure du couple de torsion appliqué à un arbre tournant, ledit module comprenant un système tel que décrit ci-dessus et des moyens d'association dudit module avec respectivement deux parties de l'arbre, ledit arbre étant dépourvu de corps d'épreuve.

Selon un troisième aspect, l'invention propose un module de mesure du couple de torsion appliqué à un arbre tournant, ledit module comprenant un système tel que décrit précédemment et des moyens d'association dudit module avec respectivement une extrémité de l'arbre et l'organe appliquant le couple, ledit arbre étant dépourvu de corps d'épreuve.

D'autres objets et avantages de l'invention apparaîtront au cours de la description qui suit, faite en référence aux dessins annexés, dans lesquels :
- la figure 1 est un schéma fonctionnel d'un système de détermination du couple absolu de torsion appliqué à un arbre tournant selon l'invention ;
- les figures 2a et 2b sont des vues de face respectivement d'un codeur et d'une portion de codeur utilisé dans le système selon l'invention ;
- la figure 3 est une vue partielle et en coupe longitudinale d'un module de mesure du couple de torsion appliqué à un arbre tournant comprenant un système selon l'invention.

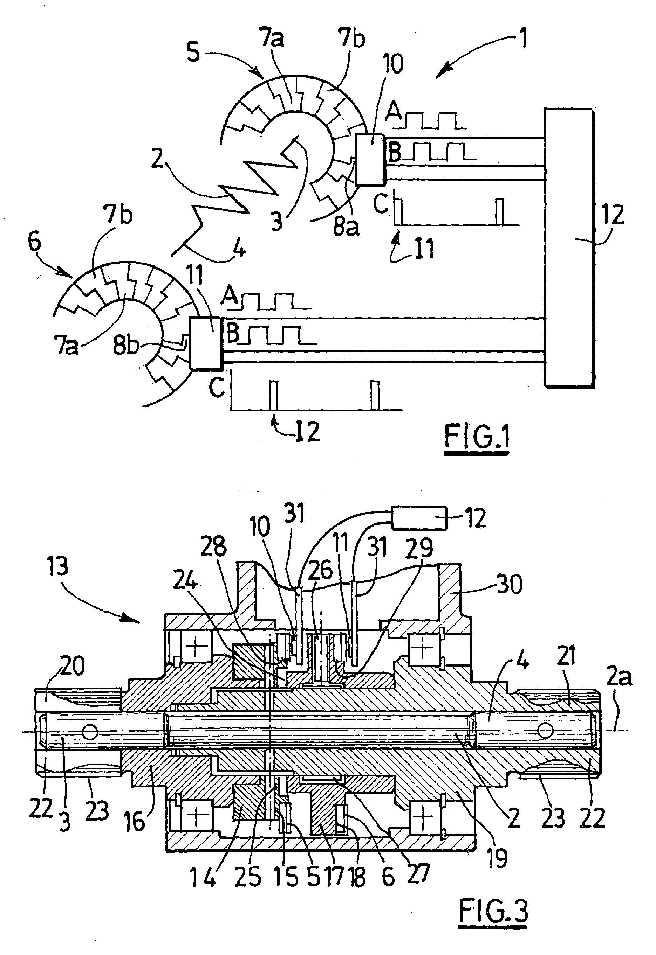

Sur la figure 1 est représenté un système de détermination 1 du couple absolu de torsion appliqué à un arbre tournant du type comprenant un corps d'épreuve 2 déformable en torsion sous l'action du couple appliqué sur ledit arbre.

Dans un exemple particulier, l'arbre tournant est l'arbre d'une colonne de direction d'un véhicule sur lequel un couple de braquage est exercé par le conducteur à l'aide du volant de direction.

Lorsque l'on veut connaître ce couple de braquage, il est connu de prévoir un corps d'épreuve 2 apte à transmettre le couple appliqué en se déformant élastiquement sous l'action dudit couple.

La mesure du couple exercé peut alors être adressée, notamment sous la forme d'un signal électrique, à un calculateur d'assistance de direction qui déclenche l'assistance, par exemple par l'intermédiaire d'un moteur électrique dans le cas d'une direction assistée électrique.

Le corps d'épreuve 2 se présente typiquement sous la forme d'une barre de torsion de diamètre amoindri par rapport à celui de l'arbre car, en élasticité linéaire isotrope, le couple exercé en torsion pure sur une barre cylindrique pleine de section circulaire varie, pour un matériau donné, en fonction de la puissance quatrième du diamètre de la barre, à angle de torsion fixé.

Par conséquent, le fait de réaliser une zone de section réduite permet, sous l'effet du couple appliqué, de concentrer et d'amplifier les déformations en torsion sur ladite zone de sorte à en faire une zone de mesure privilégiée pour la valeur du couple.

Le corps d'épreuve 2 présente une première 3 et une deuxième extrémité 4 qui, sous l'effet du couple appliqué sur l'arbre, se déplacent en rotation conjointement à l'arbre mais avec un décalage angulaire de l'une par rapport à l'autre.

On souhaite mesurer ce décalage angulaire afin de déterminer, par un dispositif de traitement prenant en compte la nature du corps d'épreuve, le couple appliqué sur l'arbre.

A cet effet, on utilise un dispositif de mesure comprenant un premier 5 et un deuxième 6 codeur destinés à être solidarisés en rotation respectivement au voisinage de la première 3 et de la deuxième 4 extrémité du corps d'épreuve 2.

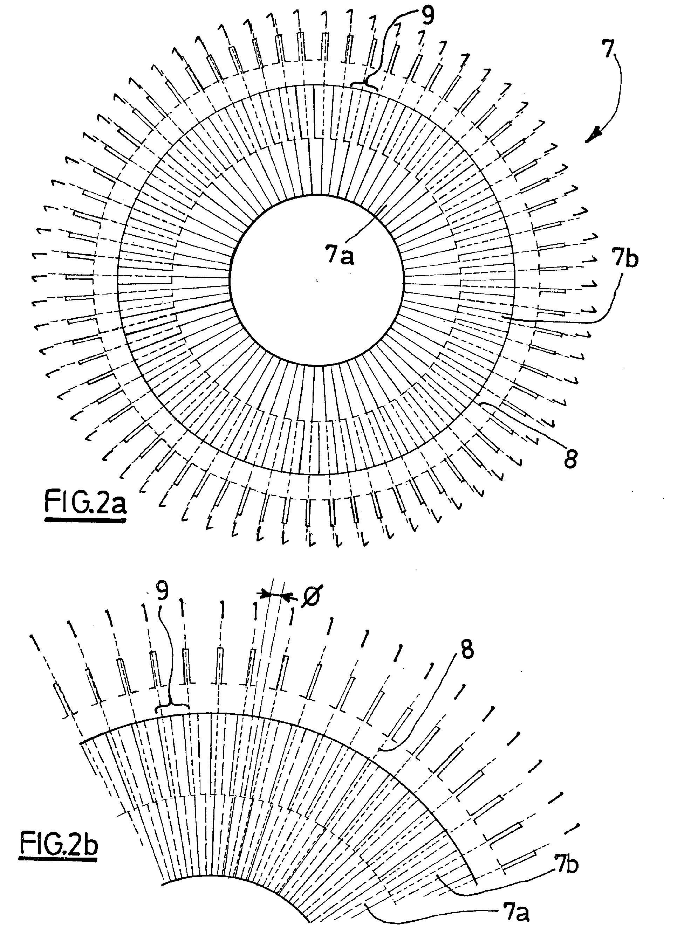

Les figures 2 représentent un mode de réalisation des codeurs 5, 6 utilisés dans le dispositif de mesure. Les codeurs 5, 6 sont formées d'un anneau magnétique 7 comprenant une piste multipolaire principale 7a et une piste multipolaire dite top tour 7b qui sont concentriques. La piste top tour 7b de chacun des codeurs 5, 6 présente plusieurs singularités 8 équiréparties avec un écart angulaire supérieur à la valeur maximale de déformation en utilisation du corps d'épreuve 2.

La répartition angulaire des singularités 8 est identique sur les deux codeurs 5, 6.

Les pistes multipolaires principale 7a et top tour 7b de chacun des codeurs 5, 6 sont formées d'une pluralité de pôles contigus à direction d'aimantation inversée d'un pôle donné par rapport aux deux pôles qui lui sont contigus.

Suivant la réalisation représentée sur la figure 2, les pistes principale 7a, disposée vers l'intérieur de l'anneau 7, et top tour 7b, disposée vers l'extérieur de l'anneau 7, comprennent 68 paires de pôles 9. Les paires de pôles 9 de la piste top tour 7b sont en retard de phase d'une valeur φ par rapport à celles de la piste principale 7a.

Chaque singularité 8 est formée d'une paire de pôle 9, la largeur des pôles étant agencée pour qu'un pôle soit déphasé de -φ par rapport au pôle correspondant de la piste principale 7a.

Dans le mode de réalisation représenté, la piste top tour 7b présente une singularité 8 toutes les paires de pôle 9, soit 68 singularités. Par souci de lisibilité, il n'a été représenté sur la figure 2a qu'une transition magnétique sur deux.

En variante non représenté, le nombre de paire de pôles 9 et/ou de singularité 8 et/ou la répartition des singularités 8 peuvent varier. On peut ainsi prévoir que le codeur 5, 6 ne présente qu'une seule singularité 8.

Le dispositif de mesure comprend en outre un premier 10 et un deuxième 11 capteur fixes disposés en regard et à distance d'entrefer respectivement du premier 5 et du deuxième 6 codeur.

Les capteurs 10, 11 comprennent au moins trois éléments sensibles dont au moins deux sont positionnés en regard de la piste principale 7a et au moins un est positionné en regard de la piste top tour 7b.

Dans un exemple particulier, les éléments sensibles sont choisis parmi les sondes à effet Hall, les magnétorésistances, les magnétorésistances géantes.

Les premier 10 et deuxième 11 capteurs utilisés sont aptes à délivrer deux signaux électriques S1, S2 périodiques en quadrature par l'intermédiaire des éléments sensibles disposés en regard de la piste principale 7a et un signal électrique S3 par l'intermédiaire des éléments sensibles disposés en regard de la piste top tour 7b.

Le principe d'obtention des signaux S1 et S2 à partir d'une pluralité d'éléments sensibles alignés est, par exemple, décrit dans le document FR-2 792 403 issu de la demanderesse.

Mais des capteurs 10, 11 comprenant deux éléments sensibles qui sont aptes à délivrer les signaux S1 et S2 sont également connus.

Les premier 10 et deuxième 11 capteurs comprennent chacun un circuit électronique apte, à partir des signaux électriques S1, S2 et S3, à délivrer deux signaux digitaux de position A, B carrés en quadrature et un signal top tour C sous forme d'une impulsion correspondant à la détection d'une singularité 8 de la piste top tour 7b.

Un principe d'obtention des signaux digitaux A, B et C, ainsi que différents modes de réalisation des singularités 8 magnétiques, sont décrits dans les documents FR-2 769 088 et EP-0 871 014 issus de la demanderesse.

Suivant une réalisation, chaque circuit électronique comprend en outre un interpolateur, par exemple du type décrit dans le document FR-2 754 063 issu de la demanderesse, permettant d'augmenter la résolution des signaux digitaux. En particulier, un signal comprenant 128 fronts par paire de pôle peut être obtenu.

Chaque capteur 10, 11 peut être intégré sur un substrat en silicium ou équivalent par exemple AsGa, de sorte à former un circuit intégré et personnalisé pour une application spécifique, circuit parfois désigné sous le terme ASIC pour faire référence au circuit intégré conçu partiellement ou complètement en fonction des besoins.

Bien que la description soit faite en relation avec un ensemble codeur/capteur magnétique, il est également possible de mettre en oeuvre l'invention de façon analogue en utilisant une technologie de type optique. Par exemple, le codeur peut être formé d'une cible en métal ou en verre sur laquelle les pistes principale et top tour ont été gravées de sorte à former un motif optique analogue au motif magnétique multipolaire exposé ci-dessus, les éléments sensibles étant alors formés de détecteurs optiques.

Le système de détermination 1 comprend également un dispositif de traitement 12 des signaux issus des capteurs 10, 11 qui, après mesure d'une singularité 8 sur chaque codeur 5, 6, est apte à calculer l'écart angulaire entre lesdites singularités 8 de sorte à déterminer, par comparaison avec un écart de calibration, le couple absolu de torsion appliqué à l'arbre tournant.

Pour le bon fonctionnement du système de détermination 1, les choix de la raideur de la barre de torsion composant le corps d'épreuve 2 et de la répartition des singularités 8 doit se faire de sorte que la déformation du corps d'épreuve 2 sous l'action du couple ne dépasse pas l'écart angulaire entre deux singularités 8.

Lorsqu'un couple est appliqué à l'arbre tournant auquel le corps d'épreuve 2 est associé, les extrémités 3, 4 se déplacent en rotation conjointement à l'arbre mais avec un décalage angulaire de l'une par rapport à l'autre. De ce fait, les codeurs 5, 6 solidaires respectivement des extrémités 3, 4 se déplacent avec le même décalage angulaire.

Lorsqu'une première singularité 8a du premier codeur 5 est détectée par les éléments sensibles du premier capteur 10 en regard de la piste top tour 7b, ledit premier capteur 10 délivre un signal présentant une première impulsion I1.

Puis, le corps d'épreuve 2 se déformant sous l'effet du couple appliqué, une deuxième singularité 8b du deuxième codeur 6 est détectée par les éléments sensibles du deuxième capteur 11 en regard de la piste top tour 7b, ledit deuxième capteur 11 délivre une deuxième impulsion 12.

Dans un mode de réalisation, l'écart angulaire entre la première 8a et la deuxième 8b singularité est déterminé par le dispositif de traitement 12 à partir de leur position angulaire.

Pour ce faire, les circuits électroniques des capteurs 10, 11 permettent d'obtenir, à partir des signaux A, B et C, la position angulaire des singularités 8 de la piste top tour 7b du codeur 5, 6 correspondant. Un exemple d'obtention des positions angulaires à partir des signaux A, B et C est notamment décrit dans les documents FR-2 769 087 et FR-2 769 088 issus de la demanderesse.

Le dispositif de traitement 12 dispose d'un soustracteur des valeurs des positions angulaires des singularités 8 lui permettant de déterminer l'écart angulaire entre les singularités 8a et 8b du premier 5 et du deuxième 6 codeur.

Dans un autre mode de réalisation, l'écart angulaire entre les singularités 8a et 8b est mesuré directement en mesurant l'écart entre les impulsions I1 et 12. Les circuits électroniques des capteurs 10, 11 comprennent alors des moyens de comptage incrémental des fronts des signaux digitaux A, B obtenus par interpolation à partir des paires de pôles magnétiques 9 des codeurs 5 et 6. La première impulsion I1 est alors prise comme référence et l'écart avec la deuxième impulsion 12 est déterminé en comptant le nombre de fronts des signaux A, B.

L'écart de calibration est un écart dont la valeur est constante et propre à chaque système de détermination 1. Cette valeur peut être obtenue lors d'une phase d'apprentissage à la sortie de la chaîne d'assemblage du système de détermination 1.

Dans le cas où le système de détermination 1 est utilisé pour une direction assistée, l'écart de calibration peut être mesuré, sur banc, sous couple nul après assemblage sur l'arbre de direction. La valeur de l'écart peut alors être mémorisée par des moyens prévus dans le dispositif de traitement 12.

Les caractéristiques de la barre de torsion, notamment sa raideur, formant le corps d'épreuve 2 est mémorisée dans ces mêmes moyens de mémorisation.

Le dispositif de traitement 12 comprend des moyens de comparaison de l'écart angulaire mesuré entre la première 8a et la deuxième 8b singularité avec l'écart angulaire de calibration de sorte à déterminer, en tenant compte de la raideur de la barre de torsion formant le corps d'épreuve 2, la valeur du couple absolu appliqué à l'arbre tournant.

Dans le mode de réalisation représenté, avec l'utilisation d'un codeur présentant 68 paires de pôles 9 et une singularité 8 toutes les paires de pôle 9, l'angle maximum avant détermination du couple absolu et donc avant le déclenchement de l'assistance est proche de 5° mécanique. Durant cette phase, la direction est uniquement manuelle et la valeur du couple mesuré par le système de détermination 1 est nulle.

Dès que le couple absolu est connu, l'assistance à la direction se déclenche. De manière à limiter la rupture de couple pouvant être ressentie par le conducteur lors de cette reprise d'assistance, le dispositif de traitement 12 est apte à appliquer une rampe temporelle pour passer de la valeur nulle du couple à la valeur du couple absolu déterminée.

En choisissant notamment le nombre, l'écart angulaire et la répartition des singularités 8 mais également la raideur du corps d'épreuve 2, il est possible d'adapter de manière appropriée le système de détermination 1 à l'application particulière qui en est faite. En particulier, il est possible, par un dimensionnement approprié du système de détermination 1, d'adapter la montée en couple ressentie par le conducteur.

De cette manière, le système de détermination est dimensionné pour que la montée en couple avant la détermination de la valeur du couple absolu reste inférieure au seuil de sensibilité du conducteur. Puis, après détermination de la valeur du couple absolu, la rampe temporelle permet d'avoir une montée en couple d'assistance progressive en évitant tout à-coup pouvant être ressenti par le conducteur. De fait, cela se traduit par une prestation transparente pour le conducteur.

Par ailleurs, lorsque l'on souhaite connaître en outre la position absolue de l'arbre tournant par rapport à une structure fixe, il est envisageable d'utiliser, conjointement au système de détermination 1, un système de mesure d'angle de l'arbre tournant.

En particulier, un tel système peut être réalisé suivant la demande de brevet numéro FR-03 07002 qui combine la mesure de la position incrémentale de l'arbre tournant, qui est obtenue ici par le circuit électronique des capteurs 5 et 6, avec un dispositif de mesure de la vitesse différentielle des roues de l'essieu avant. Selon cette réalisation, l'invention permet d'obtenir un module de mesure couple - angle absolus.

Dans un mode de réalisation particulier, le système 1 comprend sur un premier et un deuxième roulement associés respectivement à la première 3 et à la deuxième 4 extrémité. Chaque roulement comprend une bague fixe, une bague tournante associée au corps d'épreuve et des corps roulants disposés entre lesdites bagues.

On peut alors prévoir qu'au moins un codeur 5, 6 est associé à une bague mobile et/ou au moins un capteur 10, 11 est associé à une bague fixe. L'intégration du dispositif de mesure sur des bagues fixe et mobile est, par exemple, connue du document FR-2 794 504 issu de la demanderesse.

La figure 3 représente un module de mesure 13 du couple de torsion appliqué à un arbre tournant, ledit module 13 comprenant un système de détermination 1 de couple tel que décrit ci-dessus.

Le module 13 est destiné à être inséré, éventuellement de façon amovible, entre deux parties d'un ensemble sur lequel est appliqué le couple à mesurer.

Selon une première variante, le module 13 est destiné à être intégré entre deux parties d'un arbre, ledit arbre étant dépourvu de corps d'épreuve.

Selon une deuxième variante, le module 13 est destiné à être intégré entre un arbre et un organe appliquant le couple, ledit arbre étant dépourvu de corps d'épreuve.

Le corps d'épreuve 2 est une pièce de forme générale cylindrique d'axe 2a. Les termes « axial » et « radial » ou « transversal » s'entendent par rapport à des plans respectivement parallèle et perpendiculaire à l'axe 2a.

Dans le mode de réalisation représenté, le corps d'épreuve 2 se présente sous la forme d'une barre de torsion de section circulaire destinée à être disposée coaxialement à l'arbre. Toutefois, en fonction des contraintes d'utilisation, la disposition du corps d'épreuve 2 et/ou la géométrie de sa section peuvent être prévues différemment.

Une première pièce annulaire 14 s'étendant radialement et portant sur une surface transversale 15 le premier codeur 5 est associée au voisinage de la première extrémité 3 du corps d'épreuve 2.

L'association de la première pièce 14 sur le corps d'épreuve 2 est réalisée à l'aide d'un premier support annulaire 16 emmanché sur l'extrémité 3 du corps d'épreuve 2.

Une deuxième pièce annulaire 17 s'étendant radialement et portant, sur sa surface transversale 18 opposée au premier codeur 5, le deuxième codeur 6 est associée au voisinage de la deuxième extrémité 4 du corps d'épreuve 2.

L'association de la deuxième pièce 17 sur le corps d'épreuve 2 est réalisée à l'aide d'un deuxième support annulaire 19 de forme complémentaire au premier 16 qui est emmanché sur l'extrémité 4 du corps d'épreuve 2.

Les premier 16 et deuxième 19 supports comprennent en outre des moyens d'association 20, 21. Ces moyens 20, 21 permettent l'intégration du module 13 à deux parties de l'arbre tournant ou à une partie de l'arbre tournant et à une partie de l'organe appliquant le couple.

Les moyens d'association 20, 21 sont formés chacun d'une pièce annulaire 22 dont la surface extérieure 23 est cannelée. Lesdites pièces 22 s'étendent axialement respectivement de part et d'autre du module 13.

La partie de l'arbre et/ou de l'organe appliquant le couple peuvent être rendus solidaires respectivement de ces deux pièces annulaires cannelées 22, notamment par emmanchement à force, de sorte que l'ensemble ainsi formé soit apte d'une part à transmettre le couple et d'autre part à le mesurer.

Le positionnement de la deuxième pièce 17 par rapport à la première 14 est réalisé par mise en appui de la deuxième pièce 17 sur une rondelle 24 disposée dans un logement 25 prévu dans la première pièce 14, ladite rondelle 24 étant sensiblement dans le même plan transversal que la surface 15 portant le premier codeur 5.

La deuxième pièce 17 comprend un logement radial taraudé 26 destiné à recevoir une vis qui, en coopérant avec une bague de serrage 27, permet d'une part de rendre la deuxième pièce 17 solidaire en rotation du corps d'épreuve 2 et d'autre part de bloquer axialement l'ensemble formé des deux pièces 14, 17 portant les codeurs 5, 6.

Pour des raisons de compacité, la forme des deux supports 16, 19 est prévue avec des épaulements 28, 29 de sorte que les deux codeurs 5, 6 soient sensiblement dans le même plan axial et proches radialement l'un de l'autre.

En variante non représentée, les deux codeurs 5, 6 peuvent être associés respectivement à une extrémité 3, 4 du corps d'épreuve 2.

Le corps d'épreuve 2 est disposé de sorte à pouvoir tourner dans une gaine fixe 30, par exemple formée d'un tube creux. Les capteurs 5, 6 sont associés à la gaine 30, par exemple par clipsage d'un support 31 les portant, à distance d'entrefer respectivement d'un codeur 5, 6 de sorte à pouvoir détecter radialement le champ délivré.

Le dispositif de traitement 12 est prévu à distance de la gaine 30, par exemple au niveau d'un calculateur hôte du véhicule, pour délivrer un signal proportionnel au couple appliqué.

Dans le cas où le module 13 est associé à un arbre de direction, lorsqu'un couple est appliqué sur l'arbre par l'intermédiaire du volant de direction, le corps d'épreuve 2, notamment par sa géométrie et/ou par la nature du matériau qui le compose, est agencé pour transmettre le mouvement de rotation en subissant une torsion élastique sous l'action de ce couple.

De cette torsion, il résulte que les extrémités 3, 4 du corps d'épreuve 2, et donc les moyens qui leur sont associés, se déplacent en rotation conjointement avec l'arbre mais avec un décalage angulaire l'un par rapport à l'autre, le décalage croissant de façon proportionnelle avec l'intensité du couple.

La géométrie et/ou la nature du matériau composant le corps d'épreuve 2 sont prévus pour que, sur toute la zone d'utilisation normale de l'arbre de direction, d'une part la torsion ne dépasse pas la limite élastique du matériau et d'autre part le décalage angulaire des extrémités ne dépasse pas l'écart angulaire entre deux singularités 8.

Le système de détermination 12 permet alors de d'obtenir la valeur du couple comme exposé ci-dessus.

## Revendications

1. Système de détermination (1) du couple absolu de torsion appliqué à un arbre tournant, notamment l'arbre d'une colonne de direction d'un véhicule, ledit système (1) comprenant un corps d'épreuve (2) déformable en torsion sous l'action du couple appliqué sur ledit arbre, ledit système étant **caractérisé en ce qu'**il comprend un dispositif de mesure comprenant :
- un premier (5) et un deuxième (6) codeur destinés à être solidarisés en rotation respectivement au voisinage de chacune des extrémités (3, 4) du corps d'épreuve (2), lesdits codeurs (5, 6) présentant une singularité ou plusieurs singularités (8) équiréparties avec un écart angulaire supérieur à la valeur maximale de déformation en utilisation du corps d'épreuve (2), la répartition angulaire des singularités (8) étant identique sur les deux codeurs (5, 6) ;
- un premier (10) et un deuxième (11) capteur fixes disposés en regard et à distance d'entrefer respectivement du premier (5) et du deuxième (6) codeur, chacun desdits capteurs (10, 11) étant apte à délivrer un signal présentant une impulsion (11, 12) correspondant à la détection d'une singularité (8a, 8b) du codeur (5, 6) ;
ledit système comprenant en outre un dispositif de traitement (12) des signaux issus des capteurs (10, 11) qui, après mesure d'une singularité (8a, 8b) sur chaque codeur (5, 6), est apte à calculer l'écart angulaire entre lesdites singularités (8a, 8b) de sorte à déterminer, par comparaison avec un écart de calibration, le couple absolu de torsion appliqué.

2. Système selon la revendication 1, **caractérisé en ce que** les codeurs (5, 6) comprennent chacun une piste multipolaire principale (7a) et une piste multipolaire dite top tour (7b) qui sont concentriques, la piste top tour (7b) comprenant la singularité ou les singularités (8) équiréparties angulairement.

3. Système selon la revendication 2, **caractérisé en ce que** les pistes (7a, 7b) de chacun des codeurs (5, 6) sont formées d'une pluralité de pôles contigus à direction d'aimantation inversée d'un pôle donné par rapport aux deux pôles qui lui sont contigus.

4. Système selon la revendication 3, **caractérisé en ce que** la piste top tour (7b) présente une singularité (8) toutes les paires de pôles (9).

5. Système selon l'un quelconque des revendications 2 à 4, **caractérisé en ce que** les capteurs (10, 11) comprennent au moins trois éléments sensibles dont au moins deux sont positionnés en regard de la piste principale (7a) de sorte à délivrer deux signaux électriques périodiques en quadrature et au moins un est positionné en regard de la piste top tour (7b) de sorte à délivrer un signal électrique.

6. Système selon la revendication 5, **caractérisé en ce que** les éléments sensibles sont choisis parmi les sondes à effet Hall, les magnétorésistances, les magnétorésistances géantes.

7. Système selon l'une quelconque des revendications 1 à 6, **caractérisé en ce que** les premier (10) et deuxième (11) capteurs comprennent chacun un circuit électronique apte, à partir des signaux électriques, à délivrer deux signaux digitaux de position carrés en quadrature et un signal top tour sous forme d'une impulsion (I1, I2) correspondant à la détection d'une singularité (8a, 8b).

8. Système selon la revendication 7, **caractérisé en ce que** chaque circuit électronique comprend en outre un interpolateur augmentant la résolution des signaux digitaux.

9. Système selon la revendication 7 ou 8, **caractérisé en ce que** les circuits électroniques permettent d'obtenir la position angulaire des singularités (8) de la piste top tour (7b) du codeur (5, 6) correspondant, le dispositif de traitement (12) comprenant un soustracteur apte à déterminer l'écart angulaire entre les singularités (8a, 8b) du premier (5) et du deuxième (6) codeur.

10. Système selon l'une quelconque des revendications 1 à 9, **caractérisée en ce qu'**il comprend un premier et un deuxième roulement comprenant chacun une bague fixe, une bague tournante associée au corps d'épreuve et des corps roulants disposés entre lesdites bagues, au moins un codeur (5, 6) étant associé à une bague mobile et/ou au moins un capteur (10, 11) étant associé à une bague fixe.

11. Module (13) de mesure du couple de torsion appliqué à un arbre tournant, ledit module (13) comprenant un système (1) selon l'une quelconque des revendications 1 à 10 et des moyens d'association (20, 21) dudit module (13) avec respectivement deux parties de l'arbre, ledit arbre étant dépourvu de corps d'épreuve.

12. Module (13) de mesure du couple de torsion appliqué à un arbre tournant, ledit module comprenant un système (1) selon l'une quelconque des revendications 1 à 10 et des moyens d'association (20, 21) dudit module (13) avec respectivement une extrémité de l'arbre et l'organe appliquant le couple, ledit arbre étant dépourvu de corps d'épreuve.
